(19) Europäisches Patentamt
European Patent Office
Office européen des brevets

(11) **EP 4 545 574 A1**

(12) **EUROPEAN PATENT APPLICATION**
published in accordance with Art. 153(4) EPC

(43) Date of publication:
**30.04.2025 Bulletin 2025/18**

(21) Application number: **23915360.4**

(22) Date of filing: **13.01.2023**

(51) International Patent Classification (IPC):
***C08F 14/18*** *(2006.01)* ***C08F 16/24*** *(2006.01)*
***H01M 4/00*** *(2006.01)* ***H01M 10/00*** *(2006.01)*

(52) Cooperative Patent Classification (CPC):
**C08F 14/18; C08F 16/24; H01M 4/00; H01M 10/00;**
Y02E 60/10

(86) International application number:
**PCT/CN2023/072016**

(87) International publication number:
**WO 2024/148591 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **JIN, Haizu**
  **Ningde, Fujian 352100 (CN)**
- **PENG, Shuangjuan**
  **Ningde, Fujian 352100 (CN)**
- **LI, Baiqing**
  **Ningde, Fujian 352100 (CN)**
- **LIN, Mingxiang**
  **Ningde, Fujian 352100 (CN)**
- **ZHAO, Fenggang**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **POLYMER, ELECTRODE SHEET, AND BATTERY CELL, BATTERY AND ELECTRIC DEVICE RELATED THERETO**

(57) **Provided** in the present application are a polymer, an electrode sheet, and a battery cell, a battery and an electric device related thereto. The polymer comprises a fluoropolymer, wherein the degree of crystallinity of the fluoropolymer, which is measured by means of a differential scanning calorimetry, is XC%, where $0 < XC \leq 30$; and the melting temperature of the fluoropolymer is Tm, the unit thereof being °C, where $0 < Tm \leq 140$. The polymer of the present application has a relatively low degree of crystallinity and a relatively low melting temperature, such that the molecular chain arrangement tends to be loose, an acting force among molecular chains is relatively small, the chain segment flexibility of the polymer can be exerted, and the molecular chains, which are adjacent, are easy to unlink. When the polymer is applied to a battery cell, the cycling performance and storage performance of the battery cell can be improved.

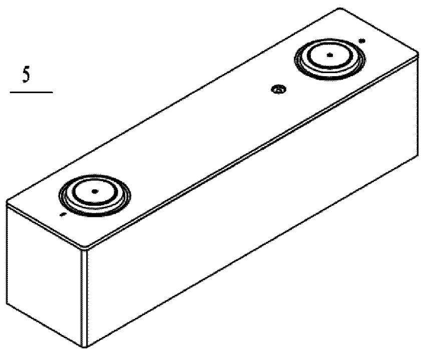


FIG. 1

EP 4 545 574 A1

## Description

### TECHNICAL FIELD

The present application relates to the field of battery, in particular to a polymer, an electrode plate and an associated battery cell, battery and electrical device.

### BACKGROUND

Battery cells have the characteristics of high capacity and long life, so they are widely used in electronic devices, such as mobile phones, laptops, electrical bicycles, electric vehicles, electric aircraft, electric ships, electric toy cars, electric toy ships, electric toy aircraft and electric tools.

As the application range of batteries becomes more and more extensive, the requirements for the performance of battery cells become increasingly stringent. In order to improve the safety performance of the battery cell, the performance of the electrode plate inside the battery cell is usually optimized and improved. However, the poor interfacial properties of the active materials in the current electrode plate results in poor cycling performance and storage performance of battery cells when the electrode plate is applied to the battery cells.

### SUMMARY

The purpose of the present application is to provide a polymer, an electrode plate and an associated battery cell, battery and electrical device.

A first aspect of the present application provides a polymer for use in a battery cell, comprising a fluoropolymer, wherein, the fluoropolymer has a crystallinity of $X_C$% as measured by differential scanning calorimetry, $0 < X_C \leq 30$; and the fluoropolymer has a melting temperature of Tm, in °C, $0 < Tm \leq 140$.

Thus, the polymer of the present application has relatively low crystallinity and melting temperature, so that the arrangement of molecular chains tends to be loose, the interaction between molecular chains is weaker, the adjacent molecular chains are more likely to become disentangled, and the chain segment movement is realized through intermolecular internal rotation to form a molecular chain structure with high flexibility. When the polymer is applied to the electrode plate of electrode battery cell, the electrode plate includes an active material layer containing a polymer and an active material. Since the polymer and the electrolytic solution in the battery cell have a good affinity, the solvent in the electrolytic solution can rapidly diffuse among the molecular chains of the polymer and be encapsulated by the molecular chain, forming an in-situ gel on the surface of the active material and attaching to the surface of the active material to play a protective role for the active material, thus closely linking the active material and the electrolytic solution, improving the solid-liquid interfacial properties, reducing the side reactions between the active material and the electrolytic solution, and improving the cycling performance and storage performance of the battery cell.

In some embodiments, a glass transition temperature of the fluoropolymer is Tg in °C, $-150 \leq Tg \leq 60$. The glass transition temperature of polymer is relatively low, the chain segment flexibility of molecular chains is better, and adjacent molecular chains are more likely to become disentangled, and it is easier to form an in-situ gel on the surface of the active material to improve the solid-liquid interfacial properties.

In some embodiments, the fluoropolymer comprises at least one of structural units shown in Formula (I) to Formula (III),

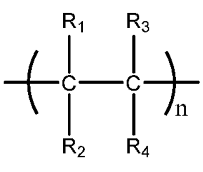 Formula (I), 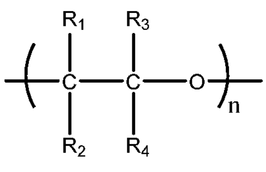 Formula (II), 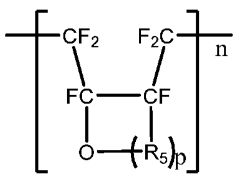 Formula (III);

where in Formulas (I) and (II), $R_1$, $R_2$, $R_3$ and $R_4$ each independently comprise a hydrogen atom, a fluorine atom, a chlorine atom, substituted or unsubstituted C1-C3 alkyl with a substituent comprising a fluorine atom, or substituted or unsubstituted C1-C3 alkoxy with a substituent comprising a fluorine atom, and at least one of $R_1$, $R_2$, $R_3$ and $R_4$ comprises a fluorine atom. p is selected from a positive integer selected from 1 to 3. n is selected from a positive integer selected from 1000 to 30000.

In some embodiments, $R_1$, $R_2$, $R_3$ and $R_4$ each independently comprise a hydrogen atom, a fluorine atom, a chlorine atom, substituted or unsubstituted C1-C2 alkyl, or substituted or unsubstituted C1-C2 alkoxy; further optionally, $R_1$, $R_2$, $R_3$ and $R_4$ each independently comprise a hydrogen atom, a fluorine atom, a chlorine atom, methyl, fluorinated

methyl, methoxy or a perfluoromethoxy.

In some embodiments, the fluoropolymer comprises at least one of structural units shown in Formula (I-1) to Formula (I-11),

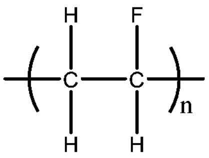 Formula (I-1), 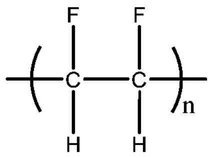 Formula (I-2), 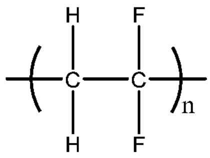 Formula (I-3),

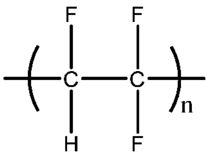 Formula (I-4), 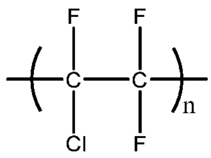 Formula (I-5), 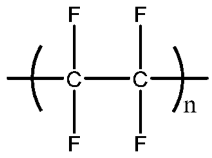 Formula (I-6),

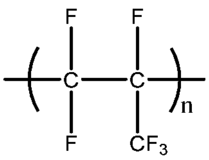 Formula (I-7), 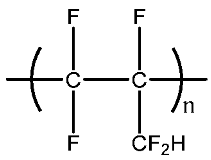 Formula (I-8), 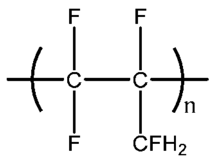 Formula (I-9),

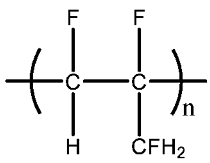 Formula (I-10), 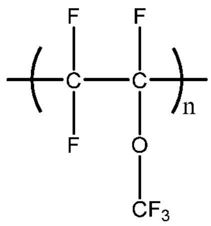 Formula (I-11).

In some embodiments, the fluoropolymer further comprises at least one of structural units shown in Formula (II-1) to Formula (II-5),

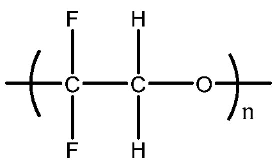 Formula (II-1), 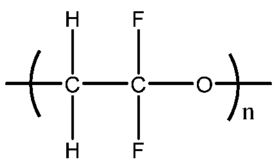 Formula (II-2),

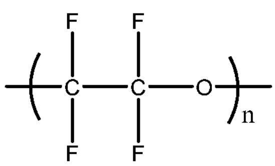 Formula (II-3), 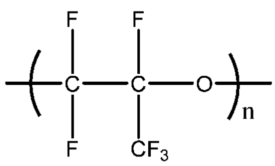 Formula (II-4),

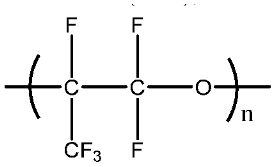 Formula (II-5).

In some embodiments, the fluoropolymer further comprises at least one of structural units shown in Formula

(III-1) to Formula (III-2),

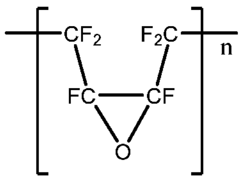 Formula (III-1), 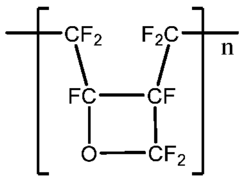 Formula (III-2),

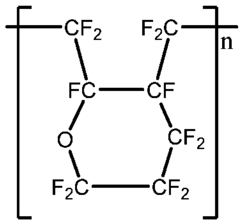 Formula (III-3).

In some embodiments, n is selected from a positive integer selected from 5000 to 20000; and/or the fluoropolymer has a molecular weight of from $2\times10^5$g/mol to $1.5\times10^6$g/mol. When the molecular weight of the polymer is within the above range, it can ensure that the polymer exhibits a certain solubility in the electrolytic solution while not being completely dissolved and dispersed by the electrolytic solution, which is beneficial for regulating the distribution and dispersion of the polymer on the surface of the active material.. Furthermore, it can further enhance the mobility among the molecular chains of polymer, with a relatively weak intermolecular force, which is conducive to the solvent molecules in the electrolytic solution to unravel the molecular chains and enter the space among the molecular chains, and then be encapsulated by the molecular chains. This, in turn, facilitates the active ions to pass through the solvent into the active material, achieving smooth and rapid migration of the active ions.

In some embodiments, wherein the polymer satisfies: $5 \leq m/n \leq 1000$, in which n represents a mass of the polymer, in grams, and m represents a mass, in grams, of a first substance that is obtained by: adding the polymer to a first solvent at a first temperature to form a polymer system, allowing the polymer system to stand for 8 hours at the first temperature and for ≥24 hours at a second temperature; and then filtering the polymer system through a 200-mesh screen to obtain remains on the screen as the first substance, wherein the first temperature is higher than the second temperature.. The polymer can form an in-situ gel in the first solvent after two stages of standing treatment, and the solvent molecules can be locked inside the polymer to reduce their overflow content from the screen. When the polymer meets the above conditions, the polymer is more likely to form an in-situ gel in the first solvent, which locks the solvent molecules inside the polymer and improves the liquid retention capacity, and further improve the cycling performance and storage performance of the battery cell.

A second aspect of the present application provides a positive electrode plate, comprising a positive electrode current collector and a positive electrode active material layer disposed on the positive electrode current collector, wherein the positive electrode active material layer comprises a positive electrode active material and a polymer, and the polymer comprises a polymer as described in any embodiment of the first aspect of the present application.

A third aspect of the present application provides a negative electrode plate, comprising a negative electrode current collector and a negative electrode active material layer disposed on the negative electrode current collector, wherein the negative electrode active material layer comprises a negative electrode active material and a polymer, and the polymer comprises a polymer as described in any embodiment of the first aspect of the present application.

A fourth aspect of the present application provides a battery cell comprising a positive electrode plate and a negative electrode plate, wherein the positive electrode plate comprises a positive electrode plate as described in any embodiment of the second aspect of the present application; and/or the negative electrode plate comprises a negative electrode plate as described in any embodiment of the third aspect of the present application.

A fifth aspect of the present application provides a battery, comprising a battery cell as described in the fourth aspect of the present application.

A sixth aspect of the application provides an electrical device comprising a battery as described in the fifth aspect of the present application.

DESCRIPTION OF THE DRAWINGS

In order to explain the technical solutions of the embodiments of the present application more clearly, the following will briefly introduce the drawings that need to be used in the embodiments of the present application. Apparently,

the drawings described below are only some embodiments of the present application. A person of ordinary skill in the art can obtain other drawings based on the accompanying drawings without creative work.

FIG. 1 is a schematic diagram of an embodiment of a battery cell of the present application.
FIG. 2 is an exploded schematic diagram of an embodiment of the battery cell in FIG. 1.
FIG. 3 is a schematic diagram of an embodiment of a battery module of the present application.
FIG. 4 is a schematic diagram of an embodiment of a battery pack of the present application.
FIG. 5 is an exploded schematic diagram of an embodiment of the battery pack in FIG. 4.
FIG. 6 is a schematic diagram of an embodiment of an electrical device including a battery cell of the present application as a power source.

The drawings are not drawn to actual scale.
Reference numerals are as follows:

1. Battery pack; 2. Upper case body; 3. Lower case body; 4. Battery module;
5. Battery cell; 51. Casing; 52. Electrode assembly;
53. Cover plate;
6. Electrical device.

## DETAILED DESCRIPTION

Hereinafter, embodiments of the polymer, the electrode plate and an associated battery cell, battery and electrical device according to the present application will be described in detail. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.
The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.
Unless stated otherwise, all the embodiments and the optional embodiments of the present application can be combined with each other to form a new technical solution. Unless stated otherwise, all technical features and optional technical features of the present application can be combined with each other to form a new technical solution.
Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.
Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.
In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).
In the present application herein, the terms "multiple" and "more than one" mean two or more, unless otherwise stated and specifically limited.

The term "alkyl" covers both linear and branched alkyl. For example, alkyl may be C1-C5 alkyl, C1-C4 alkyl, C1-C3 alkyl, C1-C2 alkyl. In some embodiments, alkyl includes methyl, ethyl, propyl, isopropyl, butyl, isobutyl, etc. Alternatively, alkyl may be optionally substituted. When substituted, the substituent includes a fluorine atom.

The term "alkoxy" refers to a group in which alkyl is connected to an oxygen atom by a single bond. For example, alkoxy may be C1-C5 alkoxy, C1-C3 alkoxy, C1-C2 alkoxy. In some embodiments, alkoxy may comprise methoxy, ethoxy, propoxy. Alternatively, alkoxy may be optionally substituted.

The term "halogen atom" means a fluorine atom, a chlorine atom, a bromine atom, etc.

The term "hydrogen" refers to 1H(hydrogen, H), 2H(deuterium, D) or 3H(tritium, T). In each embodiment, "hydrogen" may be 1H(hydrogen, H).

A battery cell includes a positive electrode plate, a negative electrode plate, and an electrolytic solution. There is a solid-liquid contact interface between the plate and the electrolytic solution, at the interface side reactions may occur and deteriorate the performance of battery cell. Taking the positive electrode plate as an example, there is a solid-liquid contact interface between the positive electrode active material contained in the positive electrode plate and the electrolytic solution, in the interface the positive electrode active material may have a side reaction with the electrolytic solution, resulting in the loss of the positive electrode active material and a decrease in the cycling performance of the battery cell, and the side reaction may produce products that are not conducive to the cycle of the battery cell, thereby deteriorating the storage performance of the battery cell.

In view of this, the inventor improved the cycling performance and storage performance of the battery cell from the perspective of improving the interfacial properties of the solid-liquid contact interface. The inventors present a polymer that, when applied to the positive electrode plate and/or negative electrode plate, is capable of forming an in-situ gel on the surface of the solid phase active material, that is, forming a stable solid-liquid interface on the surface of the active material, reducing the risk of side reactions at the solid-liquid interface, and thus improving the cycling performance and storage performance of the battery cell.

## Polymer

In a first aspect, the present application provides a polymer. The polymer is used in a battery cell and comprises a fluoropolymer, wherein the fluoropolymer has a crystallinity of $X_C$% as measured by differential scanning calorimetry, $0 < X_C \leq 30$; and the fluoropolymer has a melting temperature of Tm, in °C, $0 < Tm \leq 140$.

Crystallization refers to a process in which atoms, ions, or molecules in a material are arranged in a certain spatial order to form an ordered structure, and the conformation of the polymer in crystallization is determined by both intramolecular and intermolecular factors, and intermolecular forces will affect the stacking density between molecular chains. Crystallinity XC% is used to characterize the degree of crystallization of a material, which can be measured using a differential scanning calorimetry DSC. Specifically, the test procedure is as follows: 0.5g to 0.8g of the sample was placed in a carrier crucible, heated and cooled under nitrogen atmosphere, and heated at a rate of 10°C/min from an initial temperature of 20°C lower than the material's intrinsic Tg to the cutoff temperature of 20°C higher than the material's intrinsic Tm, and the actual glass transition temperature Tg and melting temperature Tm of the material were determined based on the heat absorption peak and exothermic peak or transition point of the material during the process.

Fluorine polymers commonly used in secondary batteries in the art have relatively high crystallinity and melting temperatures, which provide the polymer with good resistance to liquid phase electrolytes, thus effectively providing adhesive or rebound inhibition effect of active materials for a long time during the use of the battery. However, the fluorine polymer used in the present application has relatively low crystallinity and melting temperature, so that the arrangement of molecular chains tends to be loose, the interaction between molecular chains is weaker, the adjacent molecular chains are more likely to become disentangled, and the chain segment movement is realized through intermolecular internal rotation to form a molecular chain structure with high flexibility.

When the polymer is applied to the electrode plate of the battery cell, the electrode plate includes an active material layer containing a polymer and an active material. Since the polymer and the electrolytic solution in the battery cell have a good affinity, the solvent in the electrolytic solution can rapidly diffuse among the molecular chains of the polymer and be encapsulated by the molecular chain, forming an in-situ gel on the surface of the active material and attaching to the surface of the active material to play a protective role for the active material, thus closely linking the active material and the electrolytic solution, improving the solid-liquid interfacial properties, reducing the side reactions between the active material and the electrolytic solution, and improving the cycling performance and storage performance of the battery cell.

Exemplarily, the crystallinity $X_C$% of the fluoropolymer, as measured by differential scanning calorimetry, may be 5%, 10%, 15%, 20%, 25%, 30%, or a range consisting of any two of the above values.

Exemplarily, the melting temperature of the fluoropolymer may be 10°C, 20°C, 50°C, 70°C, 90°C, 100°C, 120°C, 140°C or a range consisting of any two of the above values.

In some embodiments, the glass transition temperature of the fluoropolymer is Tg in °C, $-150 \leq Tg \leq 60$.

The glass transition temperature is the temperature at which the chain segments of the polymer transition from

freezing to movement, and the glass transition temperature has an effect on the flexibility of the polymer molecular chain. The lower the glass transition temperature, the better the flexibility of the polymer molecular chain at room temperature, and the higher the glass transition temperature, the worse the flexibility of the molecular chain at room temperature. The glass transition temperature can be measured by differential scanning calorimetry DSC. The glass transition temperature of polymer is relatively low, the chain segment flexibility of molecular chains is better, and adjacent molecular chains are more likely to become disentangled. Exemplarily, the glass transition temperature of the fluoropolymer may be -150 °C, -140 °C, -120 °C, -100 °C., -80 °C, - 60 °C, -30 °C, 0 °C, 30 °C, 60 °C, or a range consisting of any two of the above values.

In some embodiments, the fluoropolymer comprises at least one of structural units shown in Formula (I) to Formula (III),

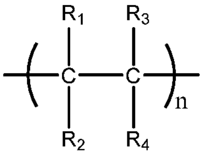 Formula (I), 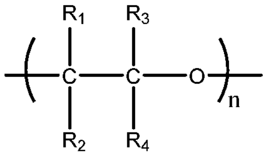 Formula (II), 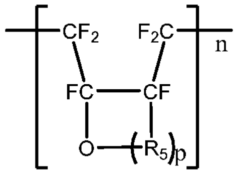 Formula (III);

where in Formulas (I) and (II), $R_1$, $R_2$, $R_3$ and $R_4$ each independently comprise a hydrogen atom, a fluorine atom, a chlorine atom, substituted or unsubstituted C1-C3 alkyl with a substituent comprising a fluorine atom, or substituted or unsubstituted C1-C3 alkoxy with a substituent comprising a fluorine atom, and at least one of $R_1$, $R_2$, $R_3$ and $R_4$ comprises a fluorine atom.

where in Formula (III), $R_5$ includes a single bonded, substituted or unsubstituted C1-C3 alkyl with a substituent comprising a fluorine atom.

p is selected from a positive integer selected from 1 to 3.

n is selected from a positive integer selected from 1000 to 30000.

In some embodiments, $R_1$, $R_2$, $R_3$ and $R_4$ each independently comprise a hydrogen atom, a fluorine atom, a chlorine atom, substituted or unsubstituted C1-C2 alkyl, or substituted or unsubstituted C1-C2 alkoxy; and at least one of $R_1$, $R_2$, $R_3$ and $R_4$ comprises a fluorine atom.

In some embodiments, $R_1$, $R_2$, $R_3$ and $R_4$ each independently comprise a hydrogen atom, a fluorine atom, a chlorine atom, methyl, fluorinated methyl, methoxy or a perfluoromethoxy.

In some embodiments, the fluoropolymer comprises at least one of structural units shown in Formula (I-1) to Formula (I-11),

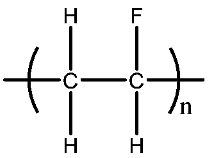 Formula (I-1), 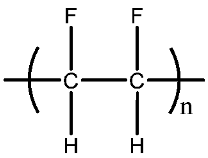 Formula (I-2), 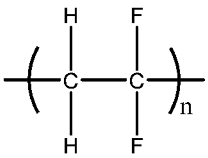 Formula (I-3),

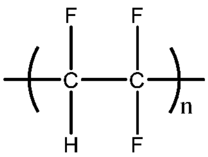 Formula (I-4), 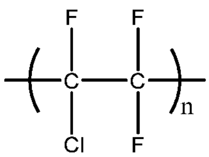 Formula (I-5), 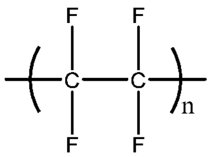 Formula (I-6),

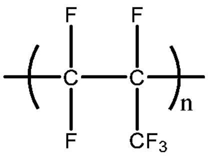 Formula (I-7), 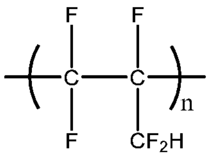 Formula (I-8), 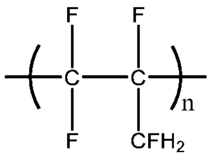 Formula (I-9),

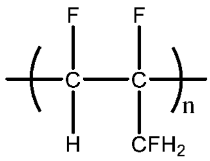 Formula (I-10), 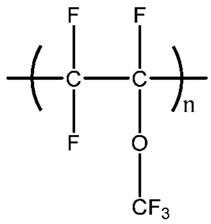 Formula (I-11).

Optionally, the fluoropolymer comprises at least two of structural units shown in formula (I-1) to formula (I-11).

In some embodiments, the fluoropolymer further comprises at least one of structural units shown in Formula (II-1) to Formula (II-5),

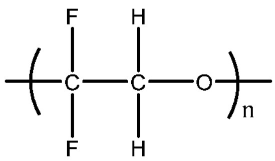 Formula (II-1), 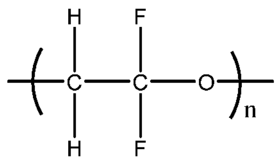 Formula (II-2),

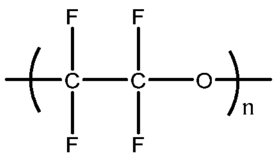 Formula (II-3), 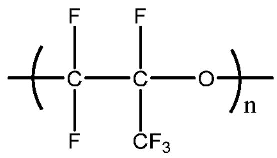 Formula (II-4),

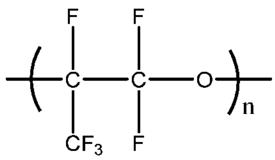 Formula (II-5).

In some embodiments, the fluoropolymer further comprises at least one of structural units shown in Formula (III-1) to Formula (III-3),

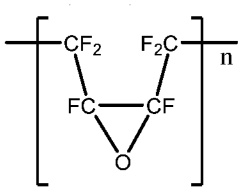 Formula (III-1), 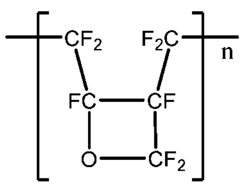 Formula (III-2),

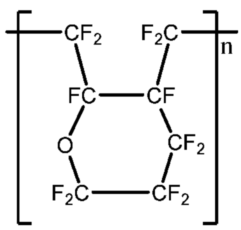 Formula (III-3).

Exemplarily, the fluoropolymer comprises one or more of polyperfluoroethylene PTFE, polyvinylidene fluoride PVDF, perfluoroethylene propylene copolymer FEP, perfluoroalkoxy polymer PFA, perfluoropolyether PFPE, polyvinylidene fluoride-hexafluoropropylene copolymer PVDF-HFP, polyvinylidene fluoride-trifluoroethylene copolymer PVDF-TrFE, and perfluoro(1-butenyl vinyl ether) polymer (CYTOP).

Optionally, the fluoropolymer comprises one or more of polyperfluoroethylene PTFE, polyvinylidene fluoride PVDF, perfluoroethylene propylene copolymer FEP, polyvinylidene fluoride-hexafluoropropylene copolymer PVDF-HFP,

and polyvinylidene fluoride-trifluoroethylene copolymer PVDF-TrFE.

The above fluoropolymer may be derived from one or more of the following monomers: fluorinated cyclohexane, fluoroethylene, 1,2-difluoroethylene, vinylidene fluoride, trifluoroethylene, trifluoroethylene chloride, tetrafluoroethylene, hexafluoropropylene, 3,3,3-trifluoropropylene, trifluoropropylene, tetrafluoropropylene, and pentafluoropropylene, and the like. Optionally, the above fluoropolymer may be derived from at least two of the following monomers: fluorinated cyclohexane, fluoroethylene, 1,2-difluoroethylene, vinylidene fluoride, trifluoroethylene, trifluoroethylene chloride, tetrafluoroethylene, hexafluoropropylene, 3,3,3-trifluoropropylene, trifluoropropylene, tetrafluoropropylene, and pentafluoropropylene, and the like.

The monomers used in the above fluoropolymer are all short-chain monomers, which are favorable for polymerization to form a linear structure or a short branched chain structure, and the degree of entanglement of this type of structure is low, which is favorable for improving the flexibility of the molecular chain, and the molecular chain can be fully stretched out in an electrolytic solution, which further improves the interfacial properties of the active material.

The groups of the polymer of the present application can be detected by infrared spectrophotometry IR. Specifically, the polymer is tested with a Thermo Nicolet Nexus 670 Attenuated Total internal Reflectance Fourier Transform Infraredspectroscopy (FTIR-ATR), and then tested with reference to the standard GB/T6040-2002, the test range: ATR method 600-4000cm$^{-1}$; repeatability: $\pm$2cm$^{-1}$; resolution: better than 4cm$^{-1}$; transmission depth of 0.2-0.6 $\mu$m.

The structure of the polymer of the present application can be tested by nuclear magnetic resonance NMR. Specifically, 1H NMR and 13C NMR were performed on a Varian Mercury Plus-400 NMR Nuclear Magnetic Resonance Spectrometer at a testing temperature of 20 °C, with TMS as an internal standard, $CDCl_3$ as a solvent, and a proton resonance frequency of 400 MHz.

In some embodiments, n is selected from a positive integer selected from 5000 to 20000.

In some embodiments, the polymer has a molecular weight of is from $2\times10^5$g/mol to $1.5\times10^6$g/mol.

When the molecular weight of the polymer is within the above range, it can ensure that the polymer exhibits a certain solubility in the electrolytic solution while not being completely dissolved and dispersed by the electrolytic solution, which is beneficial for regulating the distribution and dispersion of the polymer on the surface of the active material. Furthermore, it can further enhance the mobility among the molecular chains of polymer, with a relatively weak intermolecular force, which is conducive to the solvent molecules in the electrolytic solution to unravel the molecular chains and enter the space among the molecular chains, and then be encapsulated by the molecular chains. This, in turn, facilitates the active ions to pass through the solvent into the active material, achieving smooth and rapid migration of the active ions. Exemplary, the molecular weight of the polymer may be $2\times10^5$g/mol, $5\times10^5$g/mol, $8\times10^5$g/mol, $1\times10^6$g/mol, $1.5\times10^6$g/mol, or a range consisting of any two of the above values.

The molecular weight of the polymer has a well known meaning in the art and can be determined by the equipment and methods commonly used in the art. It can be tested by gel permeation chromatography GPC. The specific test steps are as follows: An appropriate amount of the sample to be tested (the sample concentration is guaranteed to be 8%-12% shading) was taken, 20ml deionized water was added, and at the same time sonicated for 5min (53KHz/120W) to ensure that the sample is completely dispersed, and then the sample was determined according to the GB/T19077-2016/ISO 13320:2009 standard.

Alternatively, a multi-angle laser light scatterer MALLS was used, specifically a GPC and Dawn Heleos II multi-angle laser light scatterer, Optilab T-rEX refractive index (RI) detector combined with Visco Star II viscometer (Wyatt Technology Corporation, USA). The test was carried out at 30° with THF as a mobile phase at a flow rate of 1.0 ml/min. The commercial software ASTRA6 was used to process the SEC-SAMLL data to obtain molecular weight parameters.

After further research, the inventors found that the polymer can further improve the cycling performance and storage performance of the battery cell when it further meets one or more of the following conditions.

In some embodiments, the first substance is obtained by steps of adding the polymer to a first solvent at a first temperature to form a polymer system, allowing the polymer system to stand for 8 hours at the first temperature and for $\geq$24 hours at a second temperature; partially transforming in-situ the polymer system into a gel-state material after undergoing two stages of standing treatment, and then filtering the polymer system through a 200-mesh screen to obtain remains on the screen as the first substance, wherein the first temperature is higher than the second temperature. The polymer and the first substance satisfy: $5 \leq m/n \leq 1000$, optionally, $10 \leq m/n \leq 1000$; further optionally, $10 \leq m/n \leq 50$, in which n represents a mass of the polymer, in grams, and m represents a mass of the first substance, in grams. Exemplarily, m/n may be 5, 10, 20, 25, 28, 30, 32, 35, 40, 50, 80, 100, 200, 500, 1000, or a range consisting of any two of the above values.

Exemplarily, the ratio of the mass content of the polymer to the mass content of the first solvent ranges from 1:100 to 1:10, such as, 3:50, based on the mass of the polymer system.

Exemplarily, the first solvent is the same or similar to the solvent of the electrolytic solution, and the first solvent may include a carbonate solvent. For example, the carbonate solvent comprises a cyclic carbonate solvent and/or a linear carbonate solvent.

As an example of the cyclic carbonate solvent, the cyclic carbonate solvent comprises one or more of ethylene carbonate EC, vinylene carbonate VC, fluoroethylene carbonate FEC, difluoroethylene carbonate DFEC, vinyl ethylene

carbonate VEC, and dicaprylyl carbonate CC.

As an example of the linear carbonate solvent, the linear carbonate solvent comprises one or more of dimethyl carbonate DMC, diethyl carbonate DEC, methyl ethyl carbonate EMC, diphenyl carbonate DPC, methyl allyl carbonate MAC, and polycarbonate VA.

Optionally, the first solvent may also simultaneously comprise lithium salts and electrolytic solution additives, such as lithium hexafluorophosphate, vinylene carbonate VC, fluoroethylene carbonate FEC.

In this application, m/n is also referred to as a precipitation value, which characterizes the ability of the polymer and solvent to transform into a gel-state material.

The first substance mainly comprises the gel-state material formed by the polymer and the first solvent, in which the molecular structure of the polymer basically does not change.

In some embodiments, the first substance is dried at 80°C for 12 hours to remove the first solvent from the first substance, and then tested by infrared spectrophotometry IR or nuclear magnetic resonance NMR spectroscopy. The main component of the first substance after drying is the polymer as described above.

In this application, the glass transition temperature of the polymer ≤ the first temperature ≤ the melting temperature of the polymer, and the first temperature is the normal operating temperature of the battery cell.

The first temperature is higher than the second temperature, and the first temperature and the second temperature can be set as the safe operating temperature range of the battery cell. Exemplarily, the first temperature may be from 60°C to 80°C, such as 70°C, and the second temperature may be from -30°C to 30°C, such as 25°C. That is, the first temperature is the higher operating temperature of the battery cell, and the second temperature is approximately room temperature or the lower temperature.

This application achieves the stretching of the polymer molecular chains within the safe operating temperature range of the battery cell by increasing the temperature, promoting the mutual attraction and physical binding between the polymer molecular chains and the solvent. At room temperature, the activity of the polymer molecular chain segments decreases, maintaining attachment to the surface of the active material and locking the electrolytic solution in the space environment of the polymer, forming a gel-like state in-situ, while protecting the interface of the active material and maintaining normal lithium-ion transmission, thereby establishing interface protection, reducing surface side reactions, and improving cycling performance and storage performance.

## Positive electrode plate

In a second aspect, the present application provides a positive electrode plate, comprising a positive electrode current collector and a positive electrode active material layer disposed on the positive electrode current collector, wherein the positive electrode active material layer comprises a positive electrode active material and a polymer, and the polymer comprises a polymer as described in any embodiment of the first aspect of the present application.

As an example, the positive electrode current collector has two opposite surfaces in its thickness direction, and the positive electrode active material layer is disposed on either or both of the two opposite surfaces of the positive electrode current collector.

The electrode plate can be formed by applying a slurry on a current collector, followed by drying and cold-pressing. Alternatively, the electrode plate is derived from a battery cell, by disassembling the battery cell, taking out the electrode plate infiltrated in an electrolytic solution in the battery cell, and placing the electrode plate infiltrated in the electrolytic solution under the condition of 100°C for vacuum drying for 12 hours to obtain the electrode plate, and the electrode plate is used for electrode plate tests such as test for liquid absorption rate.

The polymer can be synthesized by emulsion polymerization, suspension polymerization, bulk polymerization, solution polymerization and the like. Alternatively, the polymer is derived from a battery cell, by disassembling the battery cell, taking out the electrode plate infiltrated in an electrolytic solution in the battery cell, peeling off the active material of the obtained electrode plate by an external force to form a powder sample, adding the powder sample to DMC, stirring at 80°C for 8 hours @ 500 rpm, then allowing to stand at room temperature for 10 minutes after the stirring is completed, and taking the supernatant at 80°C, and drying for 12 hours to obtain the polymer. The resulting polymer may be mixed with a little lithium salt, but the salt basically does not affect the infrared test and precipitation value test; In order to ensure the accuracy of tests on the polymer, flushing with DMC at room temperature may be used to remove the lithium salt.

In some embodiments, the positive electrode active material layer satisfies:

$$\lambda = 1 - \frac{P_1}{P_2} \quad \text{Formula (1)},$$

$$v = \pi \times \left(\frac{d}{2}\right)^2 \times h \times \frac{\rho}{t} \quad \text{Formula (2)},$$

$$v/\lambda > 1.00 \qquad v\ (3),$$

where in Formula (1) to Formula (3),

$\lambda$ represents a porosity of the active material layer;
$P_1$ represents an actual compaction density of the positive electrode active material layer, in g/cm$^3$;
$P_2$ represents a true compaction density of the positive electrode active material, in g/cm$^3$;
v represents a liquid absorption rate of the positive electrode active material layer, in mg/s,
d represents a diameter of a capillary tube in a capillary test for the positive electrode active material layer, in mm;
h represents a liquid level height in the capillary tube, in mm;
$\rho$ represents a density of an electrolytic solution in the capillary test, in g/cm$^3$;
t represents time during which the electrolytic solution is absorbed in the capillary tube, in s.

In the present application, the actual compaction density $P_1$ refers to the ratio of the mass to the thickness of the positive electrode active material layer per unit area in the electrode plate. The actual compaction density is influenced by the force of rolling after coating the electrode plate, and expressed in g/cm$^3$. A specific test includes the steps of taking an electrode plate with a certain area S, weighing the mass M of positive electrode active material layer in the electrode plate, and measuring the thickness D of the positive electrode active material layer, and the actual compaction density = M/(S $\times$ D).

In the present application, the true compaction density $P_2$ refers to the density of the positive electrode active material itself in the positive electrode active material layer. Specifically, it refers to the true compaction density determined according to P = m/V where m is the mass of the unit "actual volume of solid material" in a dense state (excluding open holes and closed holes and pores between particles), V is the true volume obtained by testing, which can be tested with reference to GB/T24586-2009. Specifically, the test steps may be as follows:

1) Pre-treatment: Taking a clean and dry sample cup and placing it on a balance, taring it, adding a powder sample to the sample cup, with the powder sample accounting for about 1/2 of the volume of the sample cup, and recording a mass of the sample;
2) Placing the sample cup containing the sample in a true density tester, sealing the test system, introducing helium gas according to the program, measuring the gas pressure in the sample chamber and the expansion chamber, and then calculating the true volume according to Bohr's law (PV = nRT), to calculate the true compaction density.

In the test, the sample cup has a volume of 3.5 cm$^3$, and helium is used as analytical gas.

According to the Formula (1), the porosity $\lambda$ of the active material layer can be calculated by using the actual compaction density and the true compaction density.

Specifically, $\lambda = \frac{V1-V2}{V1} = 1 - \frac{V2}{V1} = 1 - \frac{m/V1}{m/V2} = 1 - \frac{P_1}{P_2}$.

V1 represents the volume of the active material layer having a mass m, in cm$^3$;
V2 represents the volume occupied by active particles in the positive electrode active material layer having a mass m, in cm$^3$;
m represents the mass of the positive electrode active material layer, in g.

Formula (2) can characterize the speed at which a certain point of an electrode plate basically completely absorbs the liquid (such as electrolytic solution) in capillary tube per unit time. In the present application, a certain point of the electrode plate refers to a region in which the electrode plate has a certain area which corresponds to the cross-sectional area of the capillary tube.

In the present application, a method for measuring the liquid absorption rate of an electrode plate includes the following steps:

Drawing a predetermined amount of electrolytic solution using a capillary tube;
Contacting the capillary tube with the electrode plate, allowing the electrode plate to be measured to absorb the electrolytic solution in the capillary tube under capillary action;

After a predetermined time period t, recording the liquid level height h at which the electrolytic solution in the capillary tube is absorbed, and calculating the amount of the absorbed electrolytic solution by using the liquid level height h and the diameter d of the capillary tube and the density ρ of the electrolytic solution, and then quantitatively calculating the liquid absorption rate v of the electrode plate based on the ratio of the absorbed amount and the predetermined time period t.

Exemplarily, d may be a value from 0.2 to 1, e.g. a value of 0.2; h may be a value from 3 to 5, e.g. a value of 3.

The capillary tube has a capillary channel to enable the capillary tube to directly suck the electrolytic solution through capillary action, without the need for an external drive unit to provide the sucking force. In this way, on the one hand, when the electrolytic solution is sucked through capillary action, the suction amount can be controlled more accurately; On the other hand, because the electrode plate to be measured absorbs the electrolytic solution through its own capillary action only when the electrode plate is in contact with the capillary tube, the electrode plate sucks the electrolytic solution out from the capillary tube, and when the electrode plate is out of contact, the electrolytic solution in the capillary tube no longer flows out, so that the reduced amount of electrolytic solution in the capillary tube during the contact can accurately reflect the corresponding volume of electrolytic solution absorbed by the electrode plate, thereby further improving the accuracy of test results and realizing quantitative calculation of the absorption rate of electrolytic solution absorbed by the electrode plate.

Formula (3) represents a liquid absorption rate of an electrode plate at a porosity λ, and may be used to characterize the liquid absorption rate of the electrode plate.

The polymer in the present application is introduced during the preparation process of the active material layer, which can form a uniform high infiltration point inside the active material layer and uniformly improve infiltration performance of the active material layer, thereby increasing liquid absorption speed of the entire active material layer and thus improving cycle performance of a battery cell using the electrode plate.

Optionally, $1.00 < v/\lambda < 50.00$.

In some embodiments, $1.00 < v/\lambda < 4.00$; optionally, $1.20 \le v/\lambda \le 3.80$; further optionally, $1.4 \le v/\lambda \le 3.6$. Exemplarily, v/ λ may be 1.20, 1.40, 1.80, 2.00, 2.50, 3.00, 3.50, 3.60, 3.80, 3.90, or a range consisting of any two of the above values.

In some embodiments, the polymer has a mass percentage content of A%, based on a mass of the positive electrode active material layer; wherein, $0.1 \le A \le 1.5$.

When the mass percentage content of the polymer is within the above range, it can significantly improve the interfacial properties of the positive electrode active material layer. Exemplarily, the mass percentage content of the polymer may be 0.1%, 0.2%, 0.5%, 0.8%, 1.0%, 1.2%, 1.5%, or a range consisting of any two of the above values.

The positive electrode active material layer comprises a positive electrode active material, and the positive electrode active material may be a positive electrode active material known in the art for battery cell. As an example, the positive electrode active material may comprise at least one of the following materials: a positive electrode active material having layered structure (for example, ternary material, lithium/sodium nickel oxide, lithium/sodium cobalt oxide, lithium/sodium manganese oxide, lithium/sodium-rich materials having layered structure and rock-salt phase layered structure), an olivine-type phosphate active material, and a positive electrode active material having spinel structure (for example, spinel lithium manganese oxide, spinel lithium nickel manganese oxide, lithium-rich spinel lithium manganese oxide and lithium nickel manganese oxide, and the like).

Exemplarily, the positive electrode active material having layered structure has the general formula: $Li_xA_yNi_aCo_bMn_cM_{(1-a-b-c)}Y_z$, wherein $0 \le x \le 2.1$, $0 \le y \le 2.1$, and $0.9 \le x + y \le 2.1$; $0 \le a \le 1$, $0 \le b \le 1$, $0 \le c \le 1$, and $0.1 \le a + b + c \le 1$; $1.8 \le z \le 3.5$; A is selected from one or more of Na, K, Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce; and Y is selected from one or more of O and F. Optionally, y = 0. Specifically, the positive electrode active material having layered structure may comprise one or more of lithium cobalt oxide (LCO), lithium nickel oxide (LNO), lithium manganese oxide (LMO), $LiNi_{1/3}Co_{1/3}Mn_{1/3}O_2$ (NCM333), $LiNi_{0.8}Co_{0.1}Mn_{0.1}O_2$ (NCM811) and $LiNi_{0.5}CO_{0.2}Mn_{0.3}O_2$ (NCM523).

Exemplarily, the olivine-type phosphate active material has the general formula: $Li_xA_yMe_aM_bP_{1-c}X_cY_z$, wherein $0 \le x \le 1.3$, $0 \le y \le 1.3$, and $0.9 \le x + y \le 1.3$; $0.9 \le a \le 1.5$, $0 \le b \le 0.5$, and $0.9 \le a + b \le 1.5$; $0 \le c \le 0.5$; $3 \le z \le 5$; A is selected from one or more of Na, K, Mg; Me is selected from Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and Y is selected from one or more of O and F. Specifically, the olivine-type phosphate active material comprises one or more of $LiFePO_4$, $LiMnPO_4$, $LiNiPO_4$, and $LiCoPO_4$.

Exemplarily, the positive electrode active material having spinel structure has the general formula: $Li_xA_yMn_aM_{2-a}Y_z$, wherein $0 \le x \le 2$, $0 \le y \le 1$, and $0.9 \le x + y \le 2$; $0.5 \le a \le 2$; $3 \le z \le 5$; A is selected from one or more of Na, K, Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Specifically, the positive electrode active material having spinel structure comprises one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$ and

$Li_{1.5}Mn_2O_4$.

In some embodiments, the positive electrode current collector may be a metal foil or a composite current collector. As an example of the metal foil, an aluminum foil or an aluminum alloy foil may be used. The composite current collector may comprise a polymeric material base layer and a metal material layer formed on at least one surface of the polymeric material base layer. For example, the metal material may comprise, one or more selected from aluminum, aluminum alloys, nickel, nickel alloys, titanium, titanium alloys, silver, and silver alloys. The polymeric material base layer may comprise one or more selected from polypropylene (PP), polyethylene terephthalate (PET), polybutylene terephthalate (PBT), polystyrene (PS), and polyethylene (PE).

In some embodiments, the positive electrode active material layer may optionally comprise a positive electrode conductive agent. The present application is not particularly limited to the type of the positive electrode conductive agent. As an example, the positive electrode conductive agent comprises one or more of superconducting carbon, conductive carbon black, conductive graphite, acetylene black, carbon black, Ketjen black, carbon dots, carbon nanotubes, graphene and carbon nanofibers. In some embodiments, the mass percentage content of the positive electrode conductive agent is 5% or lower, based on the total mass of the positive electrode active material layer.

In some embodiments, the positive electrode active material layer may optionally comprise a positive electrode binder. The present application is not particularly limited to the type of the positive electrode binder. For example, the positive electrode binder may comprise one or more selected from, polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, the mass percentage content of the positive electrode binder is 5% or lower, based on the total mass of the positive electrode active material layer. The crystallinity of the positive electrode binder is higher than that of the fluoropolymer of this application, and the melting temperature of the positive electrode binder is higher than that of the fluoropolymer of this application.

The positive electrode active material layer is usually formed by applying a positive electrode slurry on a positive electrode current collector, drying and cold-pressing. The positive electrode slurry is usually formed by dispersing a positive electrode active material, an optional conductive agent, an optional binder and any other components in a solvent and stirring them uniformly. The solvent may be N-methylpyrrolidone (NMP), but is not limited thereto.

**Negative electrode plate**

In a third aspect, the present application provides a negative electrode plate, comprising a negative electrode current collector and a negative electrode active material layer disposed on the negative electrode current collector, wherein the negative electrode active material layer comprises a negative electrode active material and a polymer, and the polymer comprises a polymer as described in any embodiment of the first aspect of the present application.

As an example, the negative electrode current collector has two opposite surfaces in its thickness direction, and the negative electrode active material layer is disposed on either or both of the two opposite surfaces of the negative electrode current collector.

In some embodiments, the negative electrode active material layer satisfies:

$$v/\lambda > 1.00 \qquad \text{Formula (3)},$$

wherein in Formula (1) to Formula (3),
$\lambda$ represents a porosity of the negative electrode active material layer;
v represents a liquid absorption rate of the negative electrode active material layer, in mg/s,

The methods for testing $\lambda$ and v are as described in the positive electrode active material layer and will not be described here.

In some embodiments, $3.00<v/\lambda<50.00$; optionally, $3.40\leq v/\lambda\leq 30.00$. Exemplarily, $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, or a range consisting of any two of the above values.

In some embodiments, the polymer has a mass percentage content of B%, based on a mass of the negative electrode active material layer; wherein, $0.2\leq B\leq 5.0$.

When the mass percentage content of the polymer is within the above range, it can significantly improve the interfacial properties of the negative electrode active material layer. Exemplarily, the mass percentage content of the polymer may be 0.2%, 0.5%, 0.8%, 1.0%, 1.2%, 1.5%, 2.0%, 2.5%, 3.0%, 3.5%, 4.0%, 4.5%, 5.0%, or a range consisting of any two of the above values.

In some embodiments, the negative electrode current collector may be a metal foil or composite current collector. As an example of the metal foil, a copper foil may be used. The composite current collector may include a polymeric material base layer and a metal layer formed on at least one surface of the polymeric material base layer. The composite current collector may be formed by forming a metal material (such as copper, copper alloy, nickel, nickel alloy, titanium, titanium alloy, silver, and silver alloy, etc.) on the polymeric material base layer (such as polypropylene (PP), polyethylene terephthalate (PET), polybutylene terephthalate (PBT), polystyrene (PS), polyethylene (PE), etc.).

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, and lithium titanate, etc.. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode active material layer may further optionally include a negative electrode binder. The negative electrode binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may further optionally include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer may further optionally include other auxiliaries, such as a thickener (such as carboxymethyl cellulose sodium (CMC-Na)), etc..

In some embodiments, the negative electrode plate may be prepared by the following steps: dispersing components for preparing the negative electrode plate, such as negative electrode active material, the polymer, conductive agent, binder, and any other components in a solvent (for example, deionized water) to form a negative electrode slurry; coating the negative electrode slurry onto the negative electrode current collector, and obtaining the negative electrode plate after processes such as drying and cold pressing.

## Battery cell

In a fourth aspect, the present application provides a battery cell comprising a positive electrode plate, a negative electrode plate, a separator disposed between the positive electrode plate and the negative electrode plate, and an electrolytic solution. The battery cell is a lithium-ion battery.

In some embodiments, the positive electrode plate may adopt the positive electrode plate of any embodiment of the second aspect of this application, thereby improving the cycling performance and storage performance of the battery cell. The negative electrode plate may adopt a conventional negative electrode plate.

In other embodiments, the negative electrode plate may adopt the negative electrode plate of any embodiment of the third aspect of this application, thereby improving the cycling performance and storage performance of the battery cell. The positive electrode plate may adopt a conventional positive electrode plate.

In some further embodiments, the positive electrode plate may adopt the positive electrode plate of any embodiment of the second aspect of this application, and the negative electrode plate may adopt the negative electrode plate of any embodiment of the third aspect of this application, thereby improving the cycling performance and storage performance of the battery cell.

## Electrolyte

The battery cell also includes an electrolyte, which serves to conduct ions between the positive electrode plate and the negative electrode plate. This application does not specifically limit the type of electrolyte, which can be selected according to needs. For example, the electrolyte may be in a liquid state, a gel state, or a fully solid state.

In some embodiments, the electrolyte is an electrolytic solution comprising an electrolyte salt and a solvent.

As an example, the lithium salts may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate ($LiPO_2F_2$), lithium difluorobisoxalate phosphate (LiDFOP), and lithium tetrafluorooxalate phosphate (LiTFOP).

As an example, the organic solvent may include one or more of ethylene carbonate (EC), propylene carbonate

(PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethyl sulfonyl ethane (ESE).

In some embodiments, the electrolytic solution may further optionally include additives. For example, the additives may include a negative electrode film-forming additive, a positive electrode film-forming additive, as well as additives that can improve certain performance of batteries, such as an additive that improves overcharge performance of batteries, an additive that improves high-temperature performance of batteries, or an additive that improves low-temperature power performance of batteries.

## Separator

In some embodiments, the battery cell further includes a separator. There is no particular limitation on the type of the separator in the present application. The separator may be any known porous separator with good chemical and mechanical stability.

In some embodiments, the separator may be made of a material selected from one or more of glass fibers, a non-woven fabric, polyethylene, polypropylene, and polyvinylidene fluoride. The separator may be a single-layer thin film or a multi-layer composite thin film. When the separator is a multi-layer composite thin film, materials of various layers may be the same or different.

In some embodiments, the positive electrode plate, the separator and the negative electrode plate may be manufactured into an electrode assembly through a winding process or a stacking process.

The present application does not have particular limitation to the shape of the battery cell. The battery cell may be cylindrical, square, or in any other shape. Fig. 1 shows a battery cell 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The battery cell 5 includes one or more electrode assemblies 52, which may be adjusted according to requirements.

A manufacturing method for the battery cell in the present application is well-known. In some embodiments, the positive electrode plate, the separator, the negative electrode plate, and the electrolytic solution may be assembled to form the battery cell. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the battery cell.

In some embodiments of the present application, the battery cell according to the present application may be assembled into a battery module. The battery module may include a plurality of battery cells, and the specific quantity may be adjusted according to the application and capacity of the battery module.

Fig. 3 is a schematic diagram of a battery module 4 as an example. As shown in Fig. 3, in the battery module 4, a plurality of battery cells 5 may be arranged in sequence along a length of the battery module 4. Of course, the battery cells may be arranged in any other manner. Further, the plurality of battery cells 5 may be fixed by fasteners.

Optionally, the battery module 4 may further include a housing having an accommodating space, and the plurality of battery cells 5 are accommodated in the accommodating space.

In some embodiments, the above battery module may alternatively be assembled into a battery pack, and the quantity of the battery module included in the battery pack may be adjusted according to the application and capacity of the battery pack.

Both battery module 4 and battery pack may be used as specific examples of the battery of this application.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to cover the lower box body 3 to form a closed space for accommodating the battery modules 4. A plurality of battery modules 4 may be arranged in the battery box in any manner.

## Electrical device

In a fifth aspect, the present application provides an electrical device, which includes at least one of the battery cell, the battery module, and the battery pack of the present application. The battery cell, the battery module, and the battery pack may be used as a power source of the electrical device or as an energy storage the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may select the battery cell, the battery module, or the battery pack according to its usage requirements. Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used. As another example, the electrical device may be a mobile phone, a tablet computer, a notebook computer, or the like. The electrical device is generally required to be thin and light, so the battery cell may be used as a power source.

## Examples

Hereinafter, embodiments of the present application will be described. The embodiments described below are exemplary and are merely used to explain the present application, and are not to be construed as limiting the present application. If specific techniques or conditions are not specified in the examples, the techniques or conditions described in the literature of the filed or the product specification shall be used. If the manufacturer of the reagent or instrument used is not specified, it is a conventional product that is commercially available.

## Example 1

(1) Preparation of positive electrode plate:

An aluminum foil having a thickness of 12 μm was used as a positive electrode current collector.

The fluoropolymer, $LiFePO_4$ as a positive electrode active material, carbon black as a conductive agent, a binder such as polyvinylidene fluoride (PVDF, having a crystallinity of 48% and a melting point of 164°C) were added into N-methylpyrrolidone (NMP) to prepare a positive electrode slurry. The mass ratio of fluoropolymer, $LiFePO_4$, the conductive carbon black, PVDF and N-methylpyrrolidone (NMP) in the positive electrode slurry were 0.5:96.8:2:0.7:29. The positive electrode slurry was applied on the current collector of aluminum foil and dried at 85°C followed by cold-pressing, trimming, slicing and slitting, and then drying under vacuum at 85°C for 4h, to obtain a positive electrode plate.

(2) Preparation of negative electrode plate:

A copper foil with a thickness of 8 μm was used as a negative electrode current collector.

Fluoropolymer, artificial graphite as a negative electrode active material, carbon black as a conductive agent, styrene butadiene rubber (SBR) as a binder, sodium hydroxymethylcellulose (CMC) as a thickener, and deionized water were mixed in a mass ratio of 2.5:94:0.5:2:100 to prepare a negative electrode slurry. The negative electrode slurry was applied on the current collector of copper foil and dried at 85°C followed by cold-pressing, trimming, slicing and slitting, and drying under vacuum at 120°C for 12h, to obtain a negative electrode plate.

(3) Preparation of electrolyte solution

In an environment with a water content of less than 10 ppm, ethylene carbonate EC and methyl ethyl carbonate (EMC) as non-aqueous organic solvents were mixed in a volume ratio of 3:7 to obtain a solvent for electrolytic solution. Then, the mixed solvent was mixed with lithium salt $LiPF_6$ to prepare an electrolytic solution with a lithium salt concentration of 1 mol/L.

(4) Preparation of lithium-ion battery:

Polyethylene film (PE) with 16-micron thickness was used as a separator. The positive electrode plate, the separator, and the negative electrode place were stacked in order, so that the separator was located between the positive electrode plate and the negative electrode plate to provide isolation, and they were then wound up to obtain an electrode assembly; the electrode assembly was placed in a shell of an outer packaging shell and dried, followed by injecting the

electrolytic solution. After vacuum sealing, steady standing, formation, shaping and other processes, a lithium-ion battery was obtained.

**Comparative Example 1**

A lithium-ion battery was prepared in a similar manner to that of Example 1, except that a binder such as polyvinylidene fluoride (PVDF, having a crystallinity of 48% and a melting point of 164°C) was added in the positive electrode plate of Comparative Example 1, without adding other fluoropolymer; In the negative electrode plate of Comparative Example 1, styrene-butadiene rubber as a binder was added without adding a fluoropolymer.

**Comparative Example 2**

A lithium-ion battery was prepared in a similar manner to that of Example 1, except that the type of fluoropolymer was changed in the positive electrode plate and the negative electrode plate of Comparative Example 2, respectively.

**Examples 2 to 4**

A lithium-ion battery was prepared in a similar manner to that of Example 1, except that the type of fluoropolymer was changed in the positive electrode plate and the negative electrode plate of Examples 2 to 4, respectively.

**Example 5**

A lithium-ion battery was prepared in a similar manner to that of Example 1, except that a fluoropolymer is added to the positive electrode plate of Example 5; no fluoropolymer is added to the negative electrode plate of Example 5.

**Example 6**

A lithium-ion battery was prepared in a similar manner to that of Example 1, except that a fluoropolymer is added to the negative electrode plate of Example 6; no fluoropolymer is added to the positive electrode plate of Example 6.

**The data of Examples and Comparative Examples were shown in Table 1.**

**Test section**

1. Test of capacity retention rate of lithium-ion battery

Each of the above-mentioned lithium-ion batteries prepared in Examples and Comparative Examples was charged at a constant current of 1/3C to 4.25 V in a normal temperature environment, then charged at a constant voltage of 4.25 V to a current of 0.05 C, allowed to stand for 5 minutes, and then discharged at 1/3C to 2.8 V, and the obtained capacity was denoted as the initial capacity C0. Then the batteries were transferred to an environment of 60 °C for storage. The above steps was repeated for the same battery and the discharge capacity Cn of the battery every 30 days was recorded. Then the capacity retention rate Pn of the battery after every 30 days was calculated by Pn = Cn/C0 * 100%. By using 6 point values of P1, P2, ... P6 as the vertical axis and the corresponding storage time as the horizontal axis, a dot plot showing capacity retention rate of the battery as a function of the storage time was obtained. The data of capacity retention rate of the battery in Table 1 were the data measured after storage for 180 days under the above test conditions, that is, the value of P6.

2. Test of direct current impedance of lithium-ion battery

Each of the above-mentioned lithium-ion batteries prepared in Examples and Comparative Examples was charged at a constant current of 1/3C to 4.25 V at 25°C, then charged at a constant voltage of 4.25 V to a current of 0.05 C, allowed to stand for 5 minutes, and the voltage V1 was recorded. Then, the battery was discharged at 1/3 C for 30 seconds, and the voltage V2 was recorded, then the internal resistance DCR1 of the battery after the first cycle was obtained by (V2-V1)/1/3 C. Then the batteries were transferred to an environment of 60 °C for storage. The above steps was repeated for the same battery and the internal resistance DCRn (n = 1, 2, 3, ... 6) of the battery after the $n^{th}$ cycle was recorded. By using 1200 point values of the above DCR1, DCR2, DCR3, ... DCR6 as the vertical axis and the corresponding number of cycles as the horizontal axis, a graph showing the discharge DCIR of the battery as a function of the storage time was obtained.

As shown in Table 1, the internal resistance increase ratio of the battery = (DCRn-DCR1)/DCR1 * 100%. The data in Table 1 were the data measured after storage for 180 days under the above test conditions.

Test results

Table 1

| Items | Fluoropolymer | | | | | | | | Positive electrode plate | Negative electrode plate | Lithium-ion battery | |
|---|---|---|---|---|---|---|---|---|---|---|---|---|
| | Monomer 1 | Monomer 2 | Monomer 3 | Crystallinity $x_c$% | Melting temperature tm(°C) | Glass transition temperature tg(°C) | Molecular weight (g/mol) | Precipitation value m/n | comprising fluoropolymer | comprising fluoropolymer | Capacity retention ratio % | DCIR % |
| Example 1 The binder PVDF in the positive electrode plate | 100% VDF | / | / | 48 | 164 | 39 | 800000 | 1.1 | / | / | / | / |
| Comparative Example 1 | / | / | / | / | / | / | / | / | No | No | 90.0 | 11 |
| Comparative Example 2 | 95% VDF | 5% TFE | / | 48 | 167 | 56 | 1300000 | 1.2 | Yes | Yes | 91.0 | 10 |
| Example 1 | 90% VDF | 10% HFP | / | 20 | 125 | -50 | 800000 | 20 | Yes | Yes | 94.0 | 6 |
| Example 2 | 80% VDF | 15% HFP | 5% TFE | 25 | 135 | 35 | 600000 | 25 | Yes | Yes | 93.0 | 7 |
| Example 3 | 75% VDF | 25% HFP | / | 11 | 112 | -65 | 650000 | 30 | Yes | Yes | 95.0 | 5 |
| Example 4 | 75% VDF | 22% HFP | 3% ethylene | 10 | 110 | -69 | 700000 | 32 | Yes | Yes | 95.0 | 5 |
| Example 5 | 90% VDF | 10% HFP | / | 20 | 125 | -50 | 800000 | 20 | Yes | No | 93.0 | 8 |
| Example 6 | 90% VDF | 10% HFP | / | 20 | 125 | -50 | 800000 | 20 | No | Yes | 93.5 | 7 |

In Table 1, VDF represents vinylidene fluoride, HFP represents hexafluoropropylene; TFE represents tetrafluoroethylene, wherein 90% VDF refers to a molar percentage of VDF being 90% based on the total molar amount of VDF and HFP, and 10% FEP refers to a molar percentage of FEP being 10%.

As can be seen from Table 1, compared with Comparative Example 1, the fluoropolymers of the present application were added in the positive electrode plates and negative electrode plates in Examples of the present application, improving cycling performance and storage performance of the lithium-ion battery. Compared with Comparative Example 2, when the conditions of $0<XC\leq30$, $0 < Tm\leq140$ is satisfied in the examples of the present application, the arrangement of molecular chains tends to be loose, the interaction between molecular chains is weaker, the adjacent molecular chains are more likely to become disentangled, and the chain segment movement is realized through intermolecular internal rotation to form a molecular chain structure with high flexibility, thereby significantly improving the cycling performance and storage performance of the lithium-ion battery.

While the present application has been described with reference to preferred embodiments, various modifications may be made thereto and components therein may be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A polymer for use in a battery cell, comprising a fluoropolymer, wherein,

   the fluoropolymer has a crystallinity of $X_C$% as measured by differential scanning calorimetry, $0 < X_C\leq30$; and the fluoropolymer has a melting temperature of Tm, in °C, $0 < Tm\leq140$.

2. The polymer according to claim 1, wherein,
   a glass transition temperature of the fluoropolymer is Tg in °C, $-150\leq Tg\leq60$.

3. The polymer according to claim 1 or 2, wherein the fluoropolymer comprises at least one of structural units shown in Formula (I) to Formula (III),

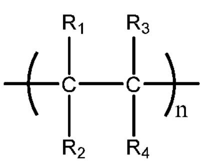 Formula (I), 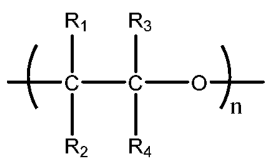 Formula (II), 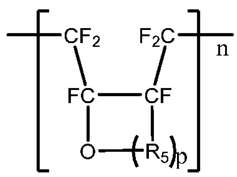 Formula (III);

   where in Formulas (I) and (II), $R_1$, $R_2$, $R_3$ and $R_4$ each independently comprise a hydrogen atom, a fluorine atom, a chlorine atom, substituted or unsubstituted C1-C3 alkyl with a substituent comprising a fluorine atom, or substituted or unsubstituted C1-C3 alkoxy with a substituent comprising a fluorine atom, and at least one of $R_1$, $R_2$, $R_3$ and $R_4$ comprises a fluorine atom;
   optionally, $R_1$, $R_2$, $R_3$ and $R_4$ each independently comprise a hydrogen atom, a fluorine atom, a chlorine atom, substituted or unsubstituted C1-C2 alkyl, or substituted or unsubstituted C1-C2 alkoxy; further optionally, $R_1$, $R_2$, $R_3$ and $R_4$ each independently comprise a hydrogen atom, a fluorine atom, a chlorine atom, methyl, fluorinated methyl, methoxy or perfluoromethoxy;
   where in Formula (III), $R_5$ includes a single bonded, substituted or unsubstituted C1-C3 alkyl with a substituent comprising a fluorine atom; p is selected from a positive integer selected from 1 to 3;
   n is selected from a positive integer selected from 1000 to 30000.

4. The polymer according to any one of claims 1 to 3, wherein the fluoropolymer comprises at least one of structural units shown in Formula (I-1) to Formula (I-11),

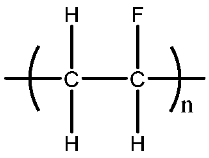 Formula (I-1), 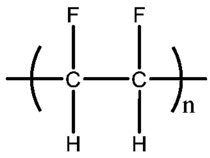 Formula (I-2), 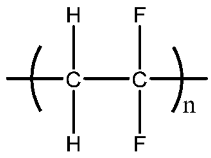 Formula (I-3),

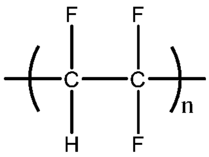 Formula (I-4), 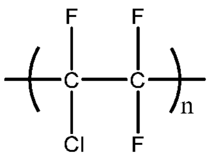 Formula (I-5), 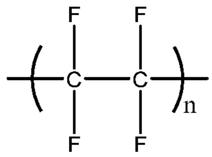 Formula (I-6),

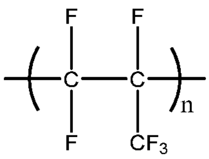 Formula (I-7), 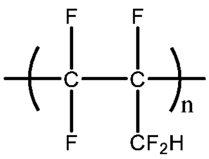 Formula (I-8), 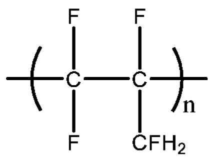 Formula (I-9),

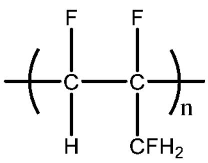 Formula (I-10), 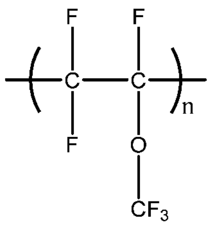 Formula (I-11).

**5.** The polymer according to any one of claims 1 to 4, wherein the fluoropolymer further comprises at least one of structural units shown in Formula (II-1) to Formula (II-5),

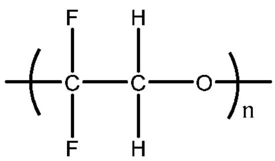 Formula (II-1), 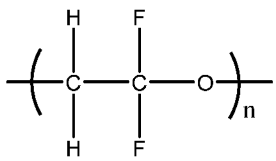 Formula (II-2),

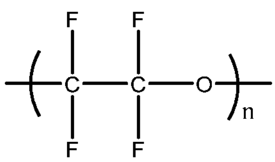 Formula (II-3), 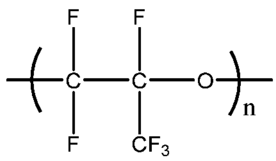 Formula (II-4),

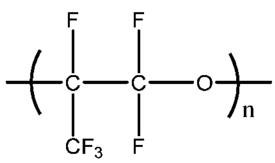 Formula (II-5).

**6.** The polymer according to any one of claims 1 to 5, wherein the fluoropolymer further comprises at least one of structural units shown in Formula (III-1) to Formula (III-3),

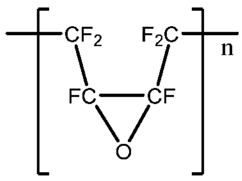 Formula (III-1), 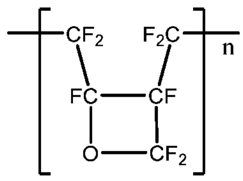 Formula (III-2),

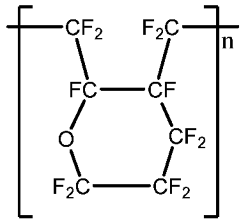 Formula (III-3).

**7.** The polymer according to any one of claims 1 to 6, wherein,

n is selected from a positive integer selected from 5000 to 20000; and/or
the fluoropolymer has a molecular weight of from $2\times10^5$g/mol to $1.5\times10^6$g/mol.

**8.** The polymer according to any one of claims 1 to 7, wherein,
the polymer satisfies: $5 \leq m/n \leq 1000$, in which n represents a mass of the polymer, in grams, and m represents a mass, in grams, of a first substance that is obtained by:
adding the polymer to a first solvent at a first temperature to form a polymer system, allowing the polymer system to stand for 8 hours at the first temperature and for ≥24 hours at a second temperature; and then filtering the polymer system through a 200-mesh screen to obtain remains on the screen as the first substance, wherein the first temperature is higher than the second temperature.

**9.** A positive electrode plate, comprising a positive electrode current collector and a positive electrode active material layer disposed on the positive electrode current collector, wherein the positive electrode active material layer comprises a positive electrode active material and a polymer, and the polymer comprises a polymer according to any one of claims 1 to 8.

**10.** A negative electrode plate, comprising a negative electrode current collector and a negative electrode active material layer disposed on the negative electrode current collector, wherein the negative electrode active material layer comprises a negative electrode active material and a polymer, and the polymer comprises a polymer of any one of claims 1 to 8.

**11.** A battery cell comprising a positive electrode plate and a negative electrode plate, wherein,

the positive electrode plate comprises the positive electrode plate of claim 9; and/or
the negative electrode plate comprises the negative electrode plate of claim 10.

**12.** A battery comprising a battery cell of claim 11.

**13.** An electrical device comprising a battery of claim 12.

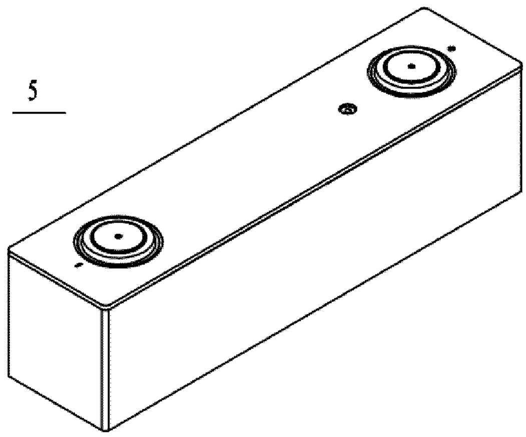


FIG. 1

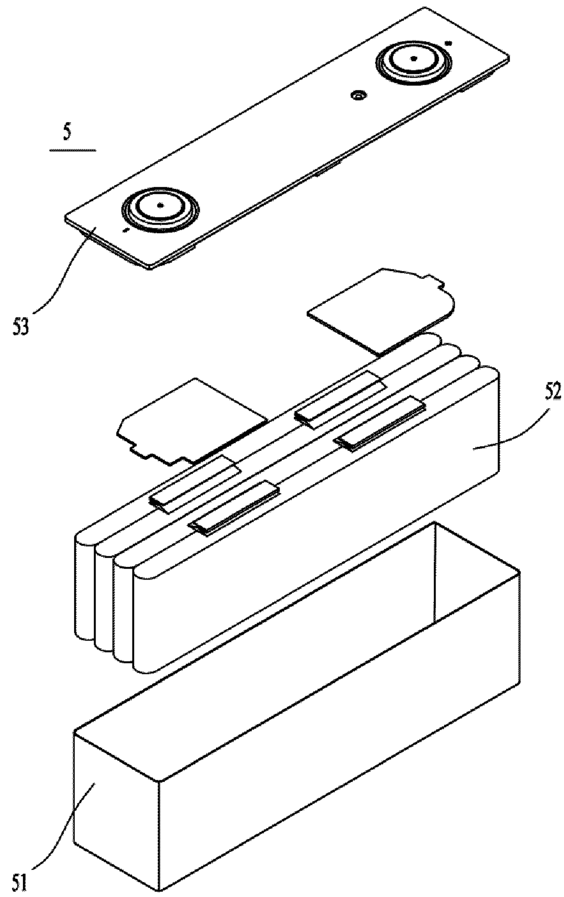


FIG. 2

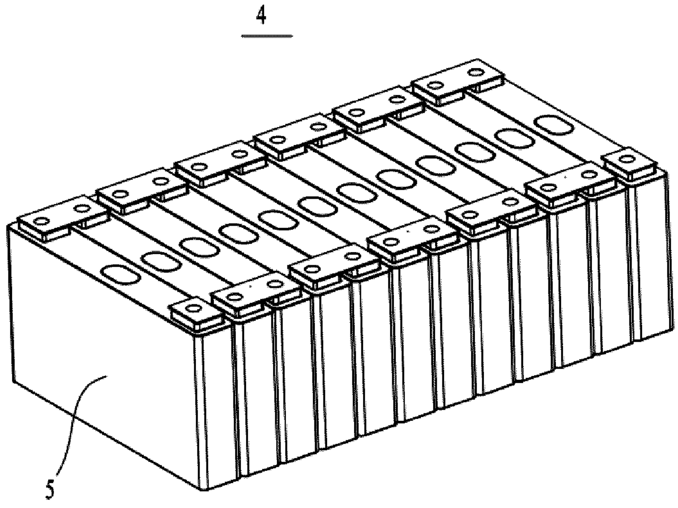


FIG. 3

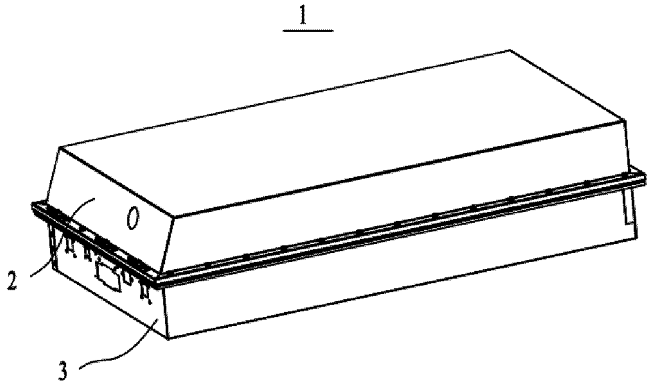


FIG. 4

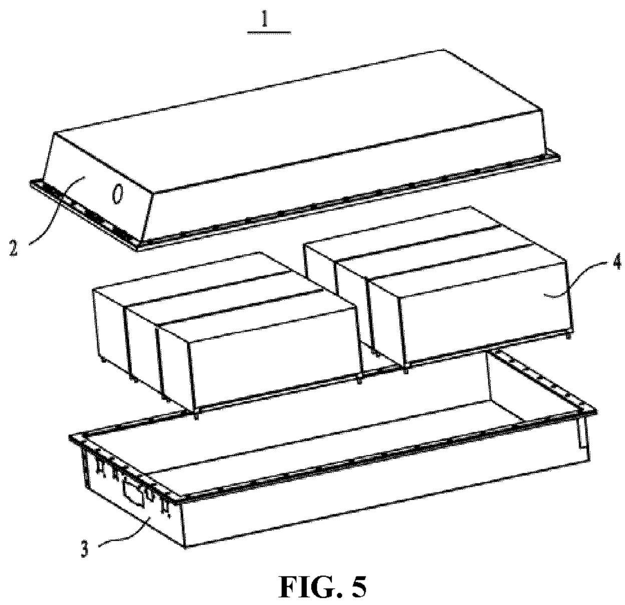


FIG. 5

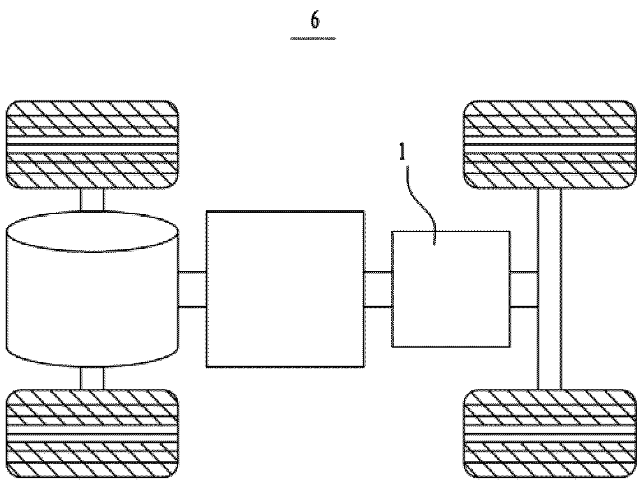


FIG. 6

**INTERNATIONAL SEARCH REPORT**

International application No.
**PCT/CN2023/072016**

**A. CLASSIFICATION OF SUBJECT MATTER**

C08F14/18(2006.01)i；C08F16/24(2006.01)i；H01M4/00(2006.01)i；H01M10/00(2006.01)i

According to International Patent Classification (IPC) or to both national classification and IPC

**B. FIELDS SEARCHED**

Minimum documentation searched (classification system followed by classification symbols)

IPC：C08F，H01M

Documentation searched other than minimum documentation to the extent that such documents are included in the fields searched

Electronic data base consulted during the international search (name of data base and, where practicable, search terms used)

CNABS, VEN, CNTXT, ENTXT, ENTXTC, VCN, CNKI, ISI: 氟, 结晶度, 熔融温度, 熔点, fluor+, crystallinity, melting, fusion, fusing, temperature, point

**C. DOCUMENTS CONSIDERED TO BE RELEVANT**

| Category* | Citation of document, with indication, where appropriate, of the relevant passages | Relevant to claim No. |
|---|---|---|
| X | CN 112088445 A (KUREHA CORP.) 15 December 2020 (2020-12-15)<br>description, paragraphs [0104]-[0137], embodiment 2 | 1-13 |
| X | CN 102356469 A (LG CHEMICAL LTD.) 15 February 2012 (2012-02-15)<br>embodiments 2-4 | 1-8 |
| X | CN 103038061 A (LG CHEMICAL LTD.) 10 April 2013 (2013-04-10)<br>embodiments 2 and 3 | 1-8 |
| X | CN 108192009 A (SHANDONG HUAXIA SHENZHOU NEW MATERIAL CO., LTD.) 22 June 2018 (2018-06-22)<br>comparative examples 1 and 2 | 1-8 |
| A | WO 0132726 A1 (ATOFINA CHEMICALS, INC. et al.) 10 May 2001 (2001-05-10)<br>entire document | 1-13 |
| A | WO 2012125786 A2 (ARKEMA INC. et al.) 20 September 2012 (2012-09-20)<br>entire document | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 September 2023** | **24 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/072016**

| Patent document cited in search report | Publication date (day/month/year) | Patent family member(s) | Publication date (day/month/year) |
|---|---|---|---|
| CN 112088445 A | 15 December 2020 | WO 2019230075 A1 | 05 December 2019 |
| | | JP 6768176 B2 | 14 October 2020 |
| | | JPWO 2019230075 A1 | 17 December 2020 |
| | | US 2021210783 A1 | 08 July 2021 |
| | | US 11380935 B2 | 05 July 2022 |
| | | KR 20200142097 A | 21 December 2020 |
| | | KR 102279840 B1 | 20 July 2021 |
| | | EP 3806190 A1 | 14 April 2021 |
| | | EP 3806190 A4 | 14 July 2021 |
| | | EP 3806190 B1 | 24 August 2022 |
| CN 102356469 A | 15 February 2012 | EP 2410570 A2 | 25 January 2012 |
| | | EP 2410570 A4 | 12 June 2013 |
| | | EP 2410570 B1 | 27 January 2016 |
| | | WO 2010107282 A2 | 23 September 2010 |
| | | WO 2010107282 A3 | 25 November 2010 |
| | | JP 2012521088 A | 10 September 2012 |
| | | JP 5450785 B2 | 26 March 2014 |
| | | ES 2562954 T3 | 09 March 2016 |
| | | KR 20100105505 A | 29 September 2010 |
| | | KR 101114919 B1 | 14 February 2012 |
| | | US 2012031475 A1 | 09 February 2012 |
| CN 103038061 A | 10 April 2013 | EP 2567813 A2 | 13 March 2013 |
| | | EP 2567813 A4 | 08 March 2017 |
| | | KR 20110123212 A | 14 November 2011 |
| | | KR 101519183 B1 | 11 May 2015 |
| | | TW 201208875 A | 01 March 2012 |
| | | TWI 527691 B | 01 April 2016 |
| | | WO 2011139052 A2 | 10 November 2011 |
| | | WO 2011139052 A3 | 19 April 2012 |
| | | US 2013171447 A1 | 04 July 2013 |
| | | US 9312415 B2 | 12 April 2016 |
| | | JP 2013525164 A | 20 June 2013 |
| CN 108192009 A | 22 June 2018 | None | |
| WO 0132726 A1 | 10 May 2001 | EP 1144469 A1 | 17 October 2001 |
| | | EP 1144469 A4 | 09 February 2005 |
| | | EP 1144469 B1 | 22 December 2010 |
| | | RU 2256669 C2 | 20 July 2005 |
| | | US 6586547 B1 | 01 July 2003 |
| | | JP 2012067324 A | 05 April 2012 |
| | | DE 60045408 D1 | 03 February 2011 |
| | | MXPA 01006827 A | 19 August 2004 |
| | | JP 2003514036 A | 15 April 2003 |
| WO 2012125786 A2 | 20 September 2012 | JP 2014508209 A | 03 April 2014 |
| | | JP 6124807 B2 | 10 May 2017 |
| | | WO 2012125786 A3 | 14 November 2013 |
| | | US 2014005325 A1 | 02 January 2014 |
| | | US 9447214 B2 | 20 September 2016 |
| | | EP 2686355 A2 | 22 January 2014 |
| | | EP 2686355 A4 | 15 October 2014 |

Form PCT/ISA/210 (patent family annex) (July 2022)

**INTERNATIONAL SEARCH REPORT**
**Information on patent family members**

International application No.
**PCT/CN2023/072016**

| Patent document cited in search report | Publication date (day/month/year) | Patent family member(s) | Publication date (day/month/year) |
|---|---|---|---|
| | | EP 2686355 B1 | 27 June 2018 |

Form PCT/ISA/210 (patent family annex) (July 2022)